Europäisches Patentamt

European Patent Office

Office européen des brevets

(11) Publication number: **0 104 009**
**B1**

# EUROPEAN PATENT SPECIFICATION

(45) Date of publication of patent specification: **29.10.86**

(21) Application number: **83304946.3**

(22) Date of filing: **26.08.83**

(51) Int. Cl.⁴: **C 08 B 11/193,** C 08 B 11/20, C 08 L 1/26

(54) Process for making cross-linked carboxymethyl hydroxyethyl cellulose.

(30) Priority: **30.08.82 US 412654**

(43) Date of publication of application:
**28.03.84 Bulletin 84/13**

(45) Publication of the grant of the patent:
**29.10.86 Bulletin 86/44**

(84) Designated Contracting States:
**DE FR GB NL**

(56) References cited:
**GB-A-2 055 106**
**US-A-4 035 195**
**US-A-4 040 484**
**US-A-4 321 968**

(73) Proprietor: **HERCULES INCORPORATED**
**Hercules Plaza**
**Wilmington Delaware 19899 (US)**

(72) Inventor: **Majewicz, Thomas George**
**R.D. No. 1 Box 285**
**Chadds Ford Pennsylvania 19317 (US)**

(74) Representative: **De Minvielle-Devaux, Ian**
**Benedict Peter et al**
**CARPMAELS & RANSFORD 43, Bloomsbury**
**Square**
**London WC1A 2RA (GB)**

Courier Press, Leamington Spa, England.

## Description

The present invention relates to a process for the provision of a cross-linked carboxymethyl hydroxyethyl cellulose, such that the product is a gel which exhibits no significant thinning when used in environments at temperatures less than 200°F (93°C).

It is known in the art that gels having desirable visco-elastic properties can be made in aqueous solutions by using crosslinked carboxymethyl hydroxyethyl cellulose (hereinafter referred to as CMHEC). A significant drawback to these gels is that they are temperature sensitive. As the temperature of the crosslinked gel is increased, the gel's viscosity decreases in the manner well known for virtually all materials.

Gels containing crosslinked CMHEC are used extensively as oil well fracturing fluids. The incorporation of crosslinked CMHEC provides desirable viscosity and suspending power. Because these gels are temperature thinning, problems arise. In order to obtain a desired viscosity deep in the well where temperatures can be in the neighbourhood of 200°F (93°C), a crosslinked gel of much higher viscosity must be prepared at the surface, where a typical temperature might be 80°F (27°C). It is difficult to obtain conveniently high flow rates into the well when pumping gels with this high viscosity.

U.S. Patent 3,448,100 claims a process for the manufacture of carboxymethyl hydroxyalkyl mixed celluloses having a carboxymethyl degree of substitution (hereinafter referred to as DS) within the range from about 0.2 to about 1.0 and a hydroxyalkyl molar substitution (hereinafter referred to as MS) within the range of about 0.2 to about 5. The patent does not address the problem of temperature sensitive gels containing cross-linked carboxymethyl hydroxyalkyl cellulose.

U.S. Patent 4,239,629 claims a gel obtained in water by combining carboxymethyl hydroxyethyl cellulose with a compound selected from the group consisting of alkali metal and ammonium dicromate. The patent does not address the problem of temperature sensitive gels based on cross-linked carboxymethyl hydroxyethyl cellulose.

Hence, there is a need for a gel containing cross-linked carboxymethyl hydroxyethyl cellulose which avoids the thinning problems when used in environments at temperatures less than 200°F (93°C), which problems are not taught by the above references.

U.S. Patent 4,035,195 relates to a thickened solution containing cross-linked carboxymethyl hydroxyethyl cellulose which is said to meet the objectives of not setting even over a period of months and being capable of withstanding conditions encountered in underground formations without undue degradation or loss of desirable viscosity (column 4, lines 56—65). It is emphasised that the CMHEC must be one in which the carboxymethyl (DS) is at least 0.2, and that below that level the polymer cannot be cross-linked to any significant extent (column 2, lines 65—68; column 3, lines 25—29 and 37—42). The cross-linking may be effected by a polyvalent metal cation. It is pointed out that all salts of a particular metal are not equally effective, and that in the case of chromium and aluminum the best salts to use are sulfates, nitrates and perchlorates (column 3, line 66 to column 4, line 5, and the Examples).

It has surprisingly been found that a satisfactory product, and in particular one which provides gels which exhibit no significant thinning at temperatures less than 200°F (93°C), is provided by a process in which an uncrosslinked CMHEC having a carboxymethyl (DS) of 0.1 to 0.21 preferably of 0.15 to 0.19, and a hydroxyethyl molar substitution greater than 1.0, is contacted with from 1% to 5%, by weight of the uncrosslinked CMHEC, of a basic aluminium acetate.

Gels prepared in aqueous solutions from the product exhibit no significant thinning at temperatures less than 200°F (93°C). Degree of substitution is the average number of hydroxyl groups substituted in the cellulose per anhydroglucose unit. Consequently, carboxymethyl (DS) is the average number of carboxymethyl groups substituted per cellulosic anhydroglucose unit.

In accordance with the invention it has been found that when the carboxymethyl (DS) of the hydroxyethylated carboxymethyl cellulose of the invention is less than 0.1, there is no significant gelation in the presence of the aluminum ion; and when the carboxymethyl (DS) is greater than 0.21 gelation will occur but there is significant thinning at elevated temperatures. Preferred CMHEC compositions have a carboxymethyl (DS) of 0.15 to 0.19.

Extent of hydroxyethylation is described in terms of molar substitution. Molar substitution is the average number of moles of reactant combined with the cellulose per anhydroglucose unit. Consequently, hydroxyethyl (MS) is the average number of moles of hydroxyethyl incorporated per anhydroglucase unit. The hydroxyethylated carboxymethyl cellulose in accordance with this invention must have a hydroxyethyl (MS) which is sufficient to make the compound water-soluble. This typically requires a hydroxyethyl (MS) greater than 1.0).

For the purposes of this invention, there is actually no upper limit to the hydroxyethyl (MS) so long as the polymer remains water-soluble. However, it has been found that if the hydroxyethyl (MS) is too great, the gel strength of the crosslinked polymer is reduced. Consequently, for almost all applications the hydroxyethyl (MS) should be less than 3.5. The best results have been found where the hydroxyethyl (MS) is in the range of 2.0 to 2.5.

The use of ionic agents to crosslink CMHEC is known to those skilled in the art. The ionic agent which is effective in this invention is basic aluminum acetate which has been found to be the crosslinking agent of choice. The amount of basic aluminum acetate used as the crosslinking agent is in the range of 1% to 5%, preferably in the range of 2% to 4%, based on the weight of the uncrosslinked polymer.

The amount of crosslinked CMHEC to be used to increase the viscosity of an aqueous solution will depend on the particular application and will be readily determinable to one skilled in the art. In general the amount of crosslinked CMHEC to be used will be in the range of 0.1 to 2% on the basis of the weight of uncrosslinked CMHEC.

The following Examples illustrate the invention and the surprising advantages conferred thereby. All percentages are by weight, based on the weight of the cellulose, unless otherwise clearly indicated.

Examples 1 to 15

The carboxymethyl hydroxyethyl cellulose of Example 6 was prepared in the following method:

A two-quart (2.27 litre) stirred autoclave glass bowl was charged with 64.8 g (0.4 mole) cotton linters (dry weight) and 1000 ml.t-butyl alcohol (99.5+%). The bowl was then sealed to the reactor and purged of oxygen, evacuating to 26 inches gauge (660 mm Hg) vacuum followed by pressurization to 20 psig (138 kPa) with nitrogen. This vacuum-pressurized cycle was repeated 5 times, after which a caustic solution (61.7 g. 50% $NaOH/73$ ml $\cdot$ $H_2O$) was added, via a syringe, to the stirred cellulose slurry under vacuum. The reactor was given another five degassing cycles, as above. The alkali cellulose was allowed to stir for 60 minutes at 15—20°C. under 10 psig (69 kPa) nitrogen. A monochloroacetic acid solution (10.4g. MCA/25 ml.tert-butyl alcohol) was then introduced to the slurry, under vacuum, via a syringe. After pressurization to 10 psig (69 kPa) $N_2$, the reaction was then heated to 70°C. (approximately 30-minute heatup period) and maintained for 30 minutes. Upon cooling to 40°C. and evacuating to approximate 20 inches (508 mm/ vacuum, 79.0 g. ethylene oxide condensed in a Fischer-Porter tube, was added. After pressurization to 10 psig (69 kPa) $N_2$, the reaction was held at 45°C. for 60 minutes, then at 80°C. for 120 minutes. Upon cooling to less than 30°C., the reaction mixture was neutralized with 31 ml $\cdot$ $HNO_3$ (70%) and 5 ml. glacial acetic acid. After filtration, the wet cake was batch washed in acetone, then dehydrated with 99.5% acetone and dried.

The CMHEC of each of Examples 1—5, 7—11 and 13—15 was prepared in an analogous manner except that the amounts of NaOH, monochloroacetic acid and ethylene oxide added were varied to give the carboxy-methyl (DS) and hydroxyethyl (MS) indicated in Table 1.'

In preparing the CMHEC of Example 12, two steps of the procedure were reversed. Ethylene oxide was first reacted with alkali cellulose and the reaction product was then treated with monochloroacetic acid.

In each Example, the CMHEC was crosslinked, a gel was formed and its stability was measured in accordance with the following procedure.

0.2 g. potassium acetate, 0.8 g. polymer and 3.2 g. potassium chloride were dry blended in a one oz. (28.4 ml) wide mouth bottle. 0.2 g. of basic aluminum acetate was added to 100 ml. of distilled water in a 150 ml. beaker. The contents of the beaker were air-stirred for 10 minutes. 150 ml. of tap water and the dry blended mixture were added to a thermal cup with agitation at 600 rpm. After 10 minutes, 0.2 ml. of glacial acetic acid (potassium acetate and acetic acid buffered to pH 4.5) was added to the thermal cup. Next was added 10 ml. of the basic aluminum acetate solution. The thermal cup was turned on and the sample heated to 180°F (82°C). The torque generated on 600 rpm constant agitator speed was measured with a sensor attached to the thermal cup at 20°F (11°C) intervals from 80°F (27°C) to 180°F (82°C). The results are shown in Table 1.

## 0 104 009

TABLE 1

| Example | Carboxymethyl (DS) | Hydroxyethyl (MS) | Torque for crosslinked gels at temperature | | | | | |
|---|---|---|---|---|---|---|---|---|
| | | | 80°F (27°C) | 100°F (38°C) | 120°F (49°C) | 140°F (60°C) | 160°F (71°C) | 180°F (82°C) |
| 1 | 0.07 | 2.94 | poor gel | | | | | |
| 2 | 0.08 | 1.91 | no gel | | | | | |
| 3 | 0.09 | 1.19 | no gel | | | | | |
| 4 | 0.16 | 2.27 | 9.1 | 9.1 | 10.5 | 13.9 | 14.1 | 12.7 |
| 5 | 0.18 | 1.62 | 9.3 | 9.9 | 12.3 | 13.5 | 12.0 | 10.5 |
| 6 | 0.18 | 2.54 | 10.9 | 10.1 | 10.7 | 11.7 | 12.2 | 12.0 |
| 7 | 0.18 | 2.70 | 6.3 | 5.7 | 5.7 | 6.2 | 6.2 | 5.4 |
| 8 | 0.19 | 1.31 | 8.6 | 8.5 | 9.8 | 11.9 | 11.3 | 9.8 |
| 9 | 0.19 | 2.28 | 9.9 | 10.1 | 10.7 | 11.0 | 10.1 | 9.1 |
| 10 | 0.19 | 2.31 | 8.7 | 8.9 | 9.9 | 11.8 | 12.2 | 11.3 |
| 11 | 0.19 | 3.47 | 5.0 | 4.1 | 5.6 | 7.0 | 7.6 | 7.4 |
| 12 | 0.21 | 2.00 | 8.2 | 7.8 | 8.8 | 10.3 | 11.4 | 9.6 |
| 13 | 0.26 | 1.70 | 17.7 | 15.6 | 13.4 | 11.3 | 9.4 | 8.1 |
| 14 | 0.29 | 2.74 | 10.6 | 9.2 | 6.8 | 4.9 | 3.0 | 1.6 |
| 15 | 0.30 | 1.03 | 17.6 | 14.9 | 12.2 | 9.6 | 7.9 | 6.5 |

### Claims

1. A process for preparing a crosslinked carboxymethyl hydroxyethyl cellulose from an uncrosslinked carboxymethyl hydroxyethyl cellulose having a carboxymethyl degree of substitution of 0.1 to 0.21 and a hydroxyethyl molar substitution greater than 1.0 characterized in that the uncrosslinked carboxymethyl hydroxyethyl cellulose is contacted with from 1% to 5%, by weight of the uncrosslinked carboxymethyl hydroxyethyl cellulose, of a basic aluminum acetate.

2. A gel containing the crosslinked carboxymethyl hydroxyethyl cellulose prepared by the process of claim 1.

### Patentansprüche

1. Verfahren zur Herstellung einer vernetzten Carboxymethyl - Hydroxyethyl - Zellulose aus einer unvernetzten Carboxymethyl - Hydroxyethyl - Zellulose mit einem Carboxymethyl-Substitutionsgrad von 0,1 bis 0,21 und einer molaren Hydroxyethyl-Substitution größer als 1,0, dadurch gekennzeichnet, daß die unvernetzte Carboxymethyl - Hydroxyethyl - Zellulose mit von 1 Gew.-% bis 5 Gew.% bezogen auf die unvernetzte Carboxymethyl - Hydroxyethyl - Zellulose eines basischen Aluminiumacetats in Kontakt gebracht wird.

2. Gel, das die vernetzte Carboxymethyl - Hydroxyethyl - Zellulose, hergestellt nach dem Verfahren des Anspruchs 1, enthält.

### Revendications

1. Procédé de préparation d'une carboxyméthyl - hydroxyéthyl - cellulose réticulée à partir d'une carboxyméthyl - hydroxyéthyl - cellulose non réticulée ayant un degré de substitution de carboxyméthyle de 0,1 à 0,21 et une substitution molaire d'hydroxyéthyle supérieure à 1,0, caractérisé en ce que la carboxyméthyl - hydroxyéthyl - cellulose non réticulée est mise en contact avec 1% à 5% en poids, sur la base de la carboxyméthyl - hydroxyéthyl - cellulose non réticulée, d'un acétate d'aluminium basique.

2. Gel contenant la carboxyméthyl - hydroxyéthyl - cellulose réticulée préparée par le procédé de la revendication 1.

4